# EUROPÄISCHE PATENTSCHRIFT

(11) **EP 1 216 638 B1**
(45) Veröffentlichungstag und Bekanntmachung des Hinweises auf die Patenterteilung: **16.08.2006**
(21) Anmeldenummer: 01128958.4
(22) Anmeldetag: 06.12.2001
(51) Int. Cl.: A47G 1/17, C09J 7/02

(54) **Wiederablösbare Vorrichtung**
Releasable device
Dispositif déconnectable

(30) Priorität: 21.12.2000 DE 10063854
(43) Veröffentlichungstag der Anmeldung: 26.06.2002
(73) Patentinhaber: tesa AG, 20253 Hamburg (DE)
(72) Erfinder: Franck, Achim, 20259 Hamburg (DE); Junghans, Andreas, 22457 Hamburg (DE); Lühmann, Bernd, Dr., 22844 Norderstedt (DE); Krawinkel, Thorsten, Dr., 22457 Hamburg (DE)

(56) Entgegenhaltungen:
- EP-A- 0 832 588
- DE-A- 19 637 223

## Beschreibung

Die Erfindung betrifft eine wiederablösbare Vorrichtung für eine Verklebung mit einer Klebfolie, beidseitig haftklebrig, die durch dehnendes Verstrecken in der Verklebungsebene rückstands- und zerstörungsfrei wiederablösbar ist, sowie ihre Verwendung.

Elastisch oder plastisch hochdehnbare (stripfähige) Selbstklebebänder, welche sich durch im wesentlichen in der Verklebungsebene dehnendes Verstrecken rückstands- und zerstörungsfrei wiederablösen lassen, sind aus US 4,024,312, DE 33 31 016, WO 92/11332, WO 92/11333, DE 42 22 849, WO 95/06691, DE 195 31 696, DE 196 26 870, DE 196 49 727, DE 196 49 728, DE 196 49 729, DE 197 08 366, DE 197 20 145, WO 99/31193 und WO 99/37729 bekannt.

Eingesetzt werden sie häufig in Form von ein- oder beidseitig haftklebrigen Klebfolienstreifen (Klebebandstreifen, Klebestreifen), welche bevorzugt einen nicht haftklebrigen Anfasserbereich aufweisen, von welchem aus der Ablöseprozeß eingeleitet wird. Besondere Anwendungen entsprechender Selbstklebebänder finden sich u. a. in DE 42 33 872, DE 195 11 288, US 5,507,464, US 5,672,402 und WO 94/21157. Spezielle Ausführungsformen sind z. B. in DE 44 28 587, DE 44 31 914, WO 97/07172, DE 196 27 400, WO 98/03601 und DE 196 49 636, DE 197 20 526, DE 197 23 177, DE 297 23 198, DE 197 26 375, DE 197 56 084 und DE 197 56 816 beschrieben.

Bevorzugte Einsatzgebiete vorgenannter Klebfolienstreifen beinhalten insbesondere die rückstands- und zerstörungsfrei wiederablösbare Fixierung leichter bis mittelschwerer Gegenstände im Wohn-, Arbeits- und Bürobereich. Sie ersetzen hierbei klassische Befestigungsmittel, wie z. B. Stecknadeln, Pin-Nadeln, Heftzwecken, Nägel, Schrauben, klassische Selbstklebebänder und Flüssigklebstoffe, um nur einige zu nennen. Wesentlich für den erfolgreichen Einsatz o. g. Klebfolienstreifen ist neben der Möglichkeit des rückstands- und zerstörungsfreien Wiederablösens verklebter Gegenstände deren einfache und schnelle Verklebung sowie für die vorgesehene Verklebungsdauer deren sicherer Halt.

Entsprechend den obengenannten Patentschriften sind geeignete Haftklebemassen für solche Produkte insbesondere solche auf Basis von Naturkautschuk-Harz Gemischen, Synthesekautschuk-Harz Gemischen sowie Acrylatcopolymeren. In der praktischen Anwendung haben sich jedoch durchweg Haftklebemassen auf Basis von Styrolblockcopolymer-Harz Gemischen am Markt etabliert. So nutzen die Produkte tesa® Power-Strips® , tesa® Power-Strips® mini und tesa® Poster-Strips der Beiersdorf AG, Hamburg (D), Command® Adhesive der Minnesota Mining and Manufacturing Co. Inc., St. Paul (USA) und Plastofix® Formule Force 1000 der Fa. Plasto (F) sämtlichst eine Haftklebemasse auf Basis von Styrolblockcopolymer-Harz Gemischen.

Handelsüblich vertrieben werden gleichermaßen Vorrichtungen aus Kunststoff, welche zumeist in Form von Haken mit vorgenannten beidseitig haftklebrigen Produkten verklebt und durch dehnendes Verstrecken in der Verklebungsebene rückstands- und zerstörungsfrei wiederablösbar sind.

Solche Vorrichtungen sind beschrieben u.a. in DE 42 33 872 und WO 94/21157. So beschreibt DE 42 33 872 einen wiederablösbaren, selbstklebenden Haken, der mit einer auf Zug entklebenden Klebfolie ausgerüstet ist (im Handel u.a. unter der Bezeichnung "tesa® Powerstrips® Systemhaken" erhältlich). Derart verwendbare Vorrichtungen bestehen aus nur einem Kunststoffteil oder sind modular aus mehreren Funktionsteilen zusammengesetzt. Vorgenannter Systemhaken besteht aus 2 Funktionsteilen, einer Basisplatte und einer aufsteckbaren Hakenform.

Bei dem praktischen Einsatz derartiger Vorrichtungen können jedoch Probleme auftreten, insbesondere beim Wiederablösen durch verdehnendes Verstrecken der verwendeten Klebfolien. Bei der in diesem Vorgang auftretenden Dehnspannung ist neben einer ausreichend hohen Reißfestigkeit der Effekt des Entklebens von wesentlicher Bedeutung. Ebenso sichergestellt sein muss, dass das Ziehen der Klebestreifen vorzugsweise in der Verklebungsebene geschieht.

Eine Möglichkeit, die zuletzt beschriebene Einschränkung zu umgehen, findet sich in EP 832 588, in welcher eine wiederablösbare selbstklebende Vorrichtung mit Bereichen versehen ist, welche geringe Haft- und Gleitreibung aufweisen. Für einen solchen Aufbau einer Vorrichtung sind jedoch aufwendige Technologien in der Herstellung erforderlich (2-Komponenten-Spritzguß u.v.a.).

Nachteilig bei den bislang bekannten Problemlösungen ist in Addition, dass die zu verwendenden Haftklebemassen, welche den typischen Anforderungsprofilen der beschriebenen Anwendungen nachkommen können, im Freiheitsgrad der Formulierungen und in der Auswahl der Rohstoffe relativ stark eingeschränkt sind. Häufig kommen hochwertige, moderne Klebmasseformulierungen nicht für den beschriebenen Wiederablösemechanismus durch Entklebung beim Verstrecken in Verklebungsebene in Betracht, da ein ausreichendes Entkleben nicht gegeben ist. In diesem Fall ist die Haft- und Gleitreibung insbesondere in Kantenbereichen der verklebten Vorrichtungen zu hoch, der Klebestreifen neigt dann zum Reißen, so dass ein spurloses Wiederablösen der Vorrichtung nicht mehr möglich ist.

Zusätzlich können Fehlanwendungen für den unerfahrenen Nutzer auftreten, wenn dieser den Verstreckungsvorgang nicht in einem Schritt vornimmt, sondern mehrmals in Etappen verstreckt und entspannt, so dass der Klebestreifen in entspannten Momenten mit insbesondere den Kantenbereichen der Vorrichtung wieder neu Verkleben kann. Dieses erneute Verkleben unter gleichzeitig anliegender Dehnspannung führt dann durch zusätzlich auftretende Reibungskräfte häufig zum Abreißen der Klebstreifen.

Von diesen Anwendungsfehlern besonderes stark betroffen sind Klebmassen, welche grundsätzlich über eine im Vergleich zur Reißkraft deutlich geringere Weiterreißkraft verfügen. An solchen Klebmassen treten bei den beschriebenen Einflüssen des Wiederverklebens und verringerten Entklebens oberflächlich kleinste Schädigungen auf, welche aufgrund der niedrigen Weiterreißkraft sehr schnell zum Reißen des Klebestreifens führen können.

In zunehmendem Maß häufen sich Anwendungen von diesen durch verdehnendes Verstrecken wiederablösbaren Klebfolien zu Dekorationszwecken, bei welchen visuelle Aspekte deutlich verstärkt zum Tragen kommen. In diesen Fällen legen die Anwender insbesondere Wert darauf, dass die verwendete Klebestreifen und Vorrichtungen (z.B. Haken) möglichst nicht auffällig gegenüber der zu befestigenden Dekoration visuell in Erscheinung treten. Im Stand der Technik ist nicht beschrieben, wie eine Vorrichtung (z.B. Haken, Basisplatten) derart zu modifizieren ist, dass das begünstigte Wiederablöseverhalten und die beschriebene optische Neutralität in Kombination funktionieren. So beschreibt DE 197 29 706 haft- und gleitreibungsverringernde Bereiche, welche aus polymeren Werkstoffen bestehen. Diese sind jedoch in ihrem optischen Erscheinungsbild üblicherweise nicht farbneutral und/oder nicht transparent, sodass gemäß dieser Beschreibung eine gewünschte visuelle Unauffälligkeit in den Anwendungen beim Verbraucher nicht erreicht werden kann.

Aufgabe der vorliegenden Erfindung war es, hier Abhilfe zu schaffen, insbesondere dem Verbraucher ein qualitativ stets gleichmäßig hochwertiges Produkt anbieten zu können, ohne bei seiner Verwendung enttäuscht zu werden hinsichtlich der Leistungsfähigkeit einer damit vorgenommenen Verklebung und ihrer späteren Auflösung, insbesondere durch Reißer.

Gelöst wird diese Aufgabe durch eine Vorrichtung, wie sie in den Ansprüchen näher gekennzeichnet ist. Um Wiederholungen zu vermeiden, wird ausdrücklich auf die Ansprüche Bezug genommen.

Es zeigte sich nämlich, dass den bisherigen derartigen Vorrichtungen bzw. Kunststoffteilen, insbesondere Haken, nicht die ihr angemessene Aufmerksamkeit gewidmet wurde, sowohl in der Patentliteratur als auch in der Praxis der diversen im Handel erhältlichen Produkte. Denn trotz aller bisher gemachten Aufwendungen kommt es immer wieder zu Reißern beim Ablösen. Das Problem ist ganz offenbar nicht vollständig erkannt. Es zeigt sich, dass die bislang im Markt befindlichen, durch dehnendes Verstrecken in der Verklebungsebene rückstands- und zerstörungsfrei wiederablösbaren Klebfolien über keine Vorrichtung verfügen, welche sie dazu befähigt, ein reißerfreies Wiederablösen auch unter unvorteilhafteren Entklebungseigenschaften und Anwendungseinflüssen weitestgehend beizubehalten. Gleichermaßen ist ein gewünschtes, visuell neutrales Erscheinungsbild bei der Anwendung in vielen Fällen nicht erreicht.

### Klebefolien

Erfindungsgemäß gegen Reißer zu schützende Klebefolien beinhalten insbesondere solche entsprechend US 4,024,312, DE 33 31 016, WO 92/11333, DE 42 22 849, WO 95/06691, DE 196 26 870, DE 196 49 727, DE 196 49 728, DE 196 49 729 und DE 197 08 366, welche Haftklebemassen auf Basis von Elastomer-Harz Gemischen nutzen. Insbesondere nutzen die erfindungsgemäß eingesetzten Klebefolien Haftklebemassen auf Basis von polymeren Dienen, wie z. B. Naturkautschuk, synthetischem Polyisopren und Polybutadien. Des weiteren nutzen diese Klebefolien Haftklebemassen auf Basis von Styrolblockcopolymeren. Bevorzugte Styrolblockcopolymere beinhalten solche mit Elastomerblöcken auf Basis von 1,3-Dienen, wie z. B. Polyisopren, Polybutadien, Isopren-Butadien Copolymeren sowie den zu vorgenannten Systemen korrespondierende partiell oder vollständig hydrierte Analoga. Des weiteren nutzen diese Klebefolien Haftklebemassen auf Basis statistischer Copolymere konjugierter Diene und weiterer polymerisierbarer Verbindungen, wie z. B. Styrol-Butadien Copolymere oder säurefunktionalisierte Styrol-Butadien Copolymere, um nur einige zu nennen. Des weiteren nutzen erfindungsgemäß gegen Reißer zu schützende Klebefolien Haftklebemassen auf Basis von polyolefinischen Elastomeren. Erfindungsgemäß einsetzbar sind des weiteren Klebefolien mit Haftklebemassen auf Basis von Gemischen vorgenannter Elastomere sowie auf Basis von Abmischungen vorgenannter Elastomere mit weiteren Polymeren.

### Kunststoffteil (Vorrichtung)

Erfindungsgemäße Vorrichtungen dienen zumeist zur einseitigen Aufnahme der Klebstoff-Folie, deren andere Seite auf den ausgewählten Untergrund geklebt wird. Auf solche Vorrichtungen können z.B. in Funktion einer Basisplatte unterschiedlichste Adapter platziert werden, u.a. Hakenkörper. Die Vorrichtung kann aber auch selbst als Haken oder dergleichen ausgebildet sein, also auf der Vorderseite z.B. eine hakenartige Haltevorrichtung aufweisen. Zur Erzeugung einer hohen Verklebungsfestigkeit besteht die Fläche der Vorrichtung, und zwangsläufig nicht der gesamte Formteilaufbau, auf der die Klebfolie appliziert wird, insbesondere aus einem Material, welches eine für den jeweiligen Anwendungsfall ausreichende Adhäsion zur Klebstoff-Folie aufweist. Hier sind vorteilhafterweise Spritzgussmassen als Formkörper geeignet, welche aus PMMA, POM, PC, Polyamid und Polyester, vor allem aber Polystyrol und/oder Styrolcopolymeren, bzw. Mischungen solcher Komponenten bestehen.

Die erfindungsgemäßen Vorrichtungen sind an zumindest einem Bereich der Rückseite aufgerauht. Überraschenderweise gelang dieser Effekt besonders mit Spritzgussmassen, auf welchen vorzugsweise zu verwendende Klebestreifen eine erwünscht gute Adhäsion vorweisen. Damit wird es möglich, eine solche gegen Reißer absichernde Modifikation ohne aufwendigen Einsatz von z.B. 2-Komponentenspritzguß-Technologien umzusetzen, wie dies gemäß EP 832.588 erforderlich wäre.

Bei den erfindungsgemäßen Vorrichtungen bleiben die eingebrachten, erfindungsgemäßen Modifikationen im optischen Erscheinungsbild Wertstoffneutral, dass heißt die Modifikationen bewirken im Auge des Anwenders keine visuell unerwünschten Veränderungen in Farbe und oder Transparenz verwendeter Werkstoffe. Es können damit auch z.B. farblose transparente Vorrichtungen mit entsprechend beschriebenen Modifikationen ausgestattet werden, welche in der Anwendung bei visueller Betrachtung nicht störend in Erscheinung treten.

Noch weiter verbessert werden kann die Wiederablösbarkeit einer erfindungsgemäßen Vorrichtung wenn zusätzlich Distanzhalter bzw. Abstandshalter vorgesehen werden, insbesondere gemäß DE 196 37 223. Damit wird ein reißerfreies Ablösen auch bei Einwirkung sehr hoher, senkrecht zur Verklebungsebene einwirkender Kräfte (z.B. über hohen Anpressdruck beim Lösen der Klebverbindung) ermöglicht.

Das Herstellen der erfindungsgemäßen Vorrichtungen kann sowohl durch entsprechende Werkzeugmodifikation direkt im Spritzgussvorgang erfolgen, als auch in einem nachträglichen Arbeitsschritt über z.B. Ätzen, Schleifen, Prägen oder Funkenerosion.

Die erfindungsgemäßen Vorrichtungen entwickeln den Stand der Technik gemäß EP 832.588 in einer anderen, bisher nicht beachteten Richtung weiter. EP 832.588 lehrt, wie man eine Platte oder ähnliche Vorrichtungen so ausrüsten kann, dass über ihre Abzugskante, über die ein Klebfolien-Streifen durch streckendes Ziehen entklebt wird, der Abzugswinkel in etwa ein rechter Winkel sein soll, insbesondere ein Winkel von 45° - 135° zur Verklebungsebene, vgl. z.B. dort Anspruch 18. Dies Strippen in einem 90° Winkel ist insbesondere für Anwendungen vorgesehen, bei denen nicht genügend Platz ist, um "normal" zu strippen, etwa der Wand entlang.

Dies zu verbessern oder zu ermöglichen war nicht Anliegen der vorliegenden Erfindung. Viel zu sehr war hier das Ziel, beim "normalen" Strippen die Neigung zu Reißern zu vermindern. Denn dies ist, wie in der Einleitung dargelegt, nach wie vor ein Problem. Und zur Lösung dieses Problems gibt der Stand der Technik wenig Anregungen, etwa Abstandshalter. Weitergehende Erkenntnisse oder Anregungen aber bietet der Stand der Technik dazu nicht.

Weitere Ausgestaltungen der Erfindung zeigen die in den Figuren beispielsweise dargestellten Vorrichtungen, ohne dass darin eine unnötige Beschränkung liegen soll. Es zeigen:
- Figur 1: eine seitliche Ansicht einer erfindungsgemäßen Vorrichtung, mit aufgeklebtem Klebfolien-Streifen,
- Figur 2: eine schräg-seitliche Ansicht gemäß Figur 1,
- Figur 3: eine schräg-seitliche Ansicht einer weiteren Vorrichtung,
- Figur 4: -eine schräg-seitliche Ansicht einer wiederum weiteren Vorrichtung.

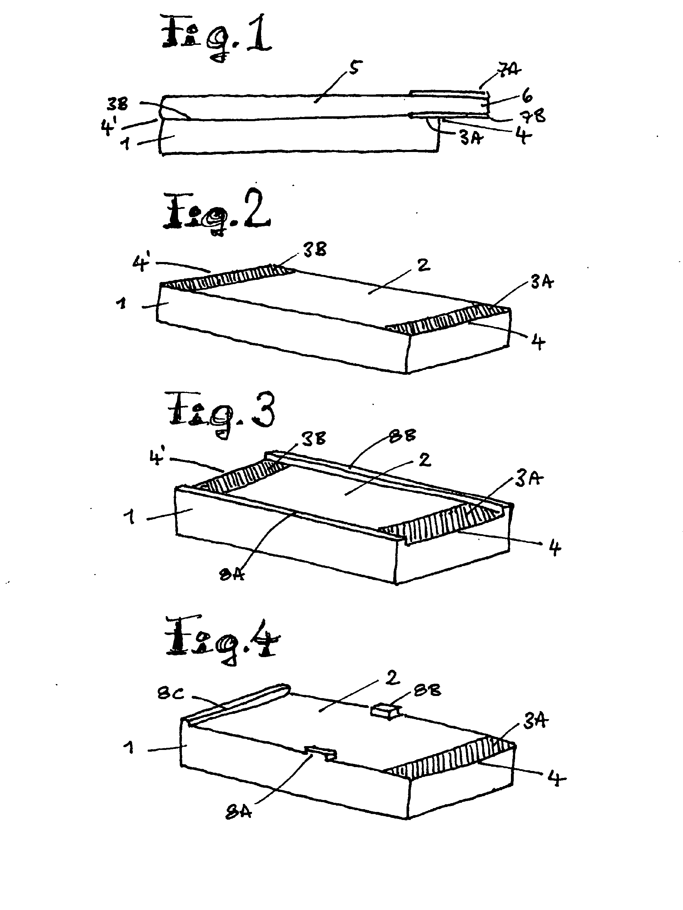

Im einzelnen zeigt Figur 1 eine Vorrichtung (1). Die Rückseite (2) der Vorrichtung (1) dient dazu, einen Klebfolien-Streifen (5) aufzukleben, wobei die Bereiche (3A) und (3B) dieser Rückseite (2), die dem Anfasser (6) des Klebfolien-Streifens (5) anliegen, aufgeraut sind. Die Tiefe (W) des aufgerauten Bereichs ist dargestellt und erstreckt sich in der dargestellten Form bis etwa zum "inneren" Ende des Anfassers (6), kann aber ohne weiteres sich auch weiter in den klebenden Bereich erstrecken, also bis dorthin, wo der Klebfolien-Streifen (5) auf der Vorrichtung (1) klebt und nicht mehr von Folie (7B) abgedeckt ist. Da der Anwender die Vorrichtung (1) mit dem Klebfolien-Streifen (5) so bekleben kann, dass der Anfasser (6) sowohl an dem einen als auch an dem anderen ende überstehen kann, sind beide Bereiche (3A) und (3B) aufgeraut. Damit wird vermieden, dass der Anwender den Klebfolien-Streifen (5) "falsch" verklebt, also so, dass der Anfasser (6) herausragt, der nicht aufgeraut ist. So braucht der Anwender nicht in Gebrauchsanweisungen oder dergleichen nachzusehen, wie er denn den Klebfolien-Streifen (5) ankleben soll, vielmehr klebt er ihn wie auch immer "richtig" an. Und er hat zugleich noch den Vorteil, dass sich gegen Ende des Stripvorganges der Klebfolien-Streifen (5) leichter aus der Klebfuge löst und damit auch am Ende des Strippens zu weniger Reißern neigt. Denn gerade am Ende des Strippens steigt die Reißerneigung, weil die Kraft, mit der der Anwender auf dem Gegenstand drückt, um ihn zu halten, bei fortschreitendem Strippen auf eine immer kleiner werdende Fläche ausgeübt wird - ein Phänomen, dem auch mittels Abstandshaltern entgegengewirkt werden kann.

An der Rückseite (2) der Vorrichtung (1) befindet sich im Bereich des Anfassers (6) eine Kante (4), unter der hinweg das Strippen erfolgt. Ebenso würde die entsprechende Kante (4') diejenige sein, unter der hinweg das Strippen erfolgen würde, wäre der Klebfolien-Streifen "anders herum" aufgeklebt, nämlich so, dass sein Anfasser (6) über diese Kante (4') hervorragt.

Folien (7A, 7B) decken den Anfasser (6) so ab, dass dieser nicht klebend ist und also gut anzufassen und später wieder loszulassen ist:
Figur 2 zeigt die Vorrichtung (1) ohne aufgeklebten Klebfolien-Streifen (5). Hier sind die aufgerauhten Bereiche (3A, 3B) schraffiert dargestellt.
In Figur 3 ist eine andere Ausführungsform dargestellt, bei der die Vorrichtung (1) eine Rückseite (2) zeigt, die zur Aufnahme eines nicht dargestellten Klebfolien-Streifens dient, und die an beiden Enden aufgeraute Bereiche (3A) und (3B) aufweist. Auch weist die Vorrichtung (1) Abstandshalter (8A, 8B) auf.
Figur 4 zeigt eine weitere bevorzugte Ausführungsform einer Vorrichtung (1) mit einer Rückseite (2), die zur Aufnahme eines nicht dargestellten Klebfolien-Streifens dient und die entsprechend Figur 3 mit Abstandshaltern (8A, 8B, 8C) ausgerüstet ist. Im übrigen sind die aufgerauten Bereiche (3A, 3B) wie gemäß Figur 1; lediglich gemäß Figur 4 ist nur ein derartiger Bereich (3A) vorgesehen, da hier der Klebfolien-Streifen (5) wegen der gleichzeitigen Begrenzungs-Funktion der Abstandshalter (8A, 8B, 8C) nur in einer Version aufgeklebt werden kann, nämlich so, dass sein Anfasser (6) über den Bereich (3A) und damit die Kante (4) ragt.

Die Abstandshalter (8A, 8B, 8C) sind als Stege bzw. Segmente ausgebildet, deren Höhe etwa die Hälfte der dicke des aufzubringenden Klebfolien-Streifens (5) beträgt, wobei der Abstand der Abstandshalter (8A) und (8B) so gewählt ist, dass der Klebfolien-Streifen (5) mit seiner Breite leicht dazwischen platziert werden kann.

In allen nachfolgenden Beispielen wurden mit bestimmungsgemäßen einschichtigen Klebstoff-Folien nachfolgender Rezeptur geprüft:
- 50Tle Escorez 5600 (Exxon Chemical), 35Tle Kraton G RP 6919 (Kraton), 15Tle Kraton G 1657 (Kraton), 0,5Tle Irganox 1010 (Ciba)
An vorgenannter Formulierung der Dicke 650µm wurde eine Zugfestigkeit von 8,3MPa und eine Reißdehnung von 750% ermittelt.

### Beispiel A

Es wurden durch Spritzguss glasklare, farblos transparente Platten (Länge x Breite = 50 x 25 mm) mit einer Dicke von 1,25 +/- 0,25 mm aus Polystyrol (PS 158 K - BASF und Empera 123 - BP Chemicals) hergestellt, bei denen eine Rauheit direkt im Spritzgussverfahren eingebracht wurde. Der aufgeraute Bereich (3A in Figur 2) ist so breit wie die Platte, also 20 mm, und 2 mm tief. Diese Platten wurden mittels, durch Dehnen rückstandsfrei wiederablösbarer Klebestreifen (Rezeptierung s.o.) (L X B = 50 x 20 mm), welche an einem Ende beidseitig mit einem anfassbaren nicht klebrigen Bereich (durch Abdeckung mit einer silikonisierten 23 µm PET - Folie) (L x B = 14 x 20 mm) ausgestattet sind, in der Art auf Fensterglas-Platten geklebt, dass der anfassbare Bereich maximal 1 mm in die Klebfuge hineinreicht. Dazu wurde der Klebestreifen (oberseitig mit Trennpapier abgedeckt) auf die Glasplatte gelegt und durch 6 maliges Überrollen (10 m/s) mit einer 2 kg-Andruckrolle angedrückt. Die oben beschriebenen Platten aus Polystyrol wurden nach Entfernen des Trennpapieres mittels vertikal auf die gesamte Klebemasse gleichmäßig einwirkendem Andruck (10 s, 100 N) in der Art aufgeklebt, dass der gesamte klebende Bereich des Klebestreifens abgedeckt war.

So präparierte Muster wurden 72h einer Lagerung bei 40°C unterzogen. Nach Rekonditionierung über 24h bei 23°C wurden die Muster in der Art beurteilt, dass die Klebestreifen händisch durch Ziehen am nicht-klebrigen Anfassbereich dehnend aus der Klebfuge herausgelöst wurden (der max. Winkel zur Verklebungsfläche beim Ablösen betrug 5° - 10°, die typische Ablösegeschwindigkeit betrug ca. 10 cm/s). Beurteilt wurde, ob sich der Klebestreifen reißer- und rückstandsfrei in beschriebener Weise ablösen ließ.

### Ergebnis:

| Platten* | Reißerhäufigkeit (%) |
|---|---|
| 2 ohne aufgerauten Bereich | 61 |
| 2a mit aufgerautem Bereich | 28 |

| | |
|---|---|
| *Technische Daten zu aufgerautem Breich: | |

| Platte | ²Mittelrauwert Rₐ | ²Gemittelte Rautiefe R_{z} |
|---|---|---|
| 2a | 3,1 µm | 20,0 µm |

| | | |
|---|---|---|
| ²gemäss DIN 4768 eingestellt am Spritzgusswerkzeug | | |

Die Reißerhäufigkeit ist damit signifikant vermindert

### Beispiel B

Es wurden Platten analog Beispiel A durch Spritzgießen hergestellt mit dem Unterschied, dass hier analog zur Figur 2a vier unterschiedliche Rauheiten eingestellt wurden. Verklebung, Konditionierung und Beurteilung der Muster erfolgte analog Beispiel A.

### Ergebnis:

| Musterbez. | ²Rₐ | ²R_{z} | Reißerhäufigkeit (%) |
|---|---|---|---|
| 2a.1 | 0,4 | 1,6 | 40 |
| 2a | 3,1 | 20,0 | 28 |
| 2a.2 | 18,0 | 85,0 | 17 |
| 2a.3 | 30,0 | 175,0 | 43 |

| | | | |
|---|---|---|---|
| ²gemäß DIN 4768 eingestellt am Spritzgusswerkzeug | | | |

Die Änderung der hier ausgewählten Rauheitsmerkmale steuert die Reißerhäufigkeit. Deutlich aufgezeigt ist in diesem Beispiel, dass Feinoptimierung der bestimmenden Rauheitsmerkmale in einzelnen Anwendungsfällen vorteilhaft sein kann.

## Patentansprüche

1. Wiederablösbare, selbstklebende Vorrichtung,
a) deren Rückseite einen Streifen einer beidseitig klebenden Klebfolie derart aufgeklebt aufweist, dass ein Ende der Klebfolie als Anfasser die Vorrichtung überragt, wobei
b) die Klebfolie eine solche ist, dass die mit ihr erzielte Verklebung durch streckendes Ziehen an dem Anfasser des Streifens in Richtung der Verklebungsebene wieder lösbar ist,
**dadurch gekennzeichnet, dass**
c) die Vorrichtung (1) an ihrer Rückseite (2) in dem Bereich (3A, 3B), der dem Anfasser (6) des Klebfolien-Streifens (5) oder dem Anfasser (6) und auch zum Teil der freien Klebmasse anliegt, einen Mittelrauwert Ra von 0,4-25µm aufweist.

2. Vorrichtung nach Anspruch 1, **dadurch gekennzeichnet, dass** der den Mittelrauwert Rₐ aufweisende Bereich (3A, 3B) diesen Mittelrauwert Rₐ nur in Teilbereichen, insbesondere aber in dem gesamten Bereich (3A, 3B) aufweist.

3. Vorrichtung nach Anspruch 1, **dadurch gekennzeichnet, dass** der Mittelrauwert Rₐ von 2-20 µm beträgt.

4. Vorrichtung nach Anspruch 1, **dadurch gekennzeichnet, dass** der den Mittelrauwert Rₐ aufweisende Bereich (3A, 3B) eine gemittelte Rautiefe R_{z} von 1-150 µm, insbesondere 2-100 µm aufweist.

5. Vorrichtung nach Anspruch 1, **dadurch gekennzeichnet, dass** der den Mittelrauwert Rₐ aufweisende Bereich (3A, 3B) zusammen mit der Vorrichtung (1) im Spritzguss hergestellt ist, oder in einem nachträglichen Arbeitsschritt, insbesondere durch Ätzen, Schleifen, Prägen oder Funkenerosion hergestellt ist.

6. Vorrichtung nach Anspruch 1, **dadurch gekennzeichnet, dass** der den Mittelrauwert Rₐ aufweisende Bereich (3A, 3B) an die Kante (4,4') anschließt, über die der Anfasser (6) herausragt, in seiner Breite der Breite des Streifens (5) mindestens entspricht oder übertrifft, und in seiner Tiefe 0,5 - 20 mm, insbesondere 0,5 - 15 mm misst.

7. Vorrichtung nach Anspruch 1, **dadurch gekennzeichnet, dass** die Rückseite (2) der Vorrichtung (1) alternative Kanten (4,4') aufweist, über die der Klebfolien-Streifen (5) mit seinem Anfasser (6) diese überragend aufklebbar ist, wobei entsprechende, dem Mittelrauwert Rₐ aufweisende Bereiche (3A, 3B) vorgesehen sind.

8. Vorrichtung nach Anspruch 1, **dadurch gekennzeichnet, dass** neben dem Klebfolien-Streifen (5) Abstandshalter (8A, 8B, 8C) vorgesehen sind, deren Höhe geringer als die Dicke des Klebfolien-Streifens (5) ist.

9. Vorrichtung nach Anspruch 6 und 7 **dadurch gekennzeichnet, dass** die Kante (4,4'), über die der Anfasser (6) herausragt, eine geringe Haft- und Gleitreibung hat, insbesondere eine niederenergetische Kunststoffoberfläche aufweist.

10. Vorrichtung nach Anspruch 1, **dadurch gekennzeichnet, dass** der Klebfolien-Streifen (5) mit oder ohne Zwischenträger elastisch oder plastisch dehnbar ist.

11. Vorrichtung nach Anspruch 1, **dadurch gekennzeichnet, dass** die Adhäsion des Klebfolien-Streifens (5) geringer als die Kohäsion ist, das Haftvermögen beim Dehnen der Folie weitgehend verschwindet, und das Verhältnis von Abzugskraft zu Reißlast mindestens 1:2,0 ist, wobei die Klebfolie eine solche auf Basis von thermoplastischem Kautschuk und klebrigmachenden Harzen ist, mit hoher Elastizität und geringer Plastizität.

12. Vorrichtung nach Anspruch 1, **dadurch gekennzeichnet, dass** die Rückseite des Klebfolien-Streifens (5) mit einem Trennlaminat, wie einem silikonisierten Trennpapier oder einer Trennfolie, abgedeckt ist.

13. Vorrichtung nach Anspruch 1, **dadurch gekennzeichnet, dass** sich an ihrer Vorderseite und/oder seitlich Befestigungsvorrichtungen, wie Haken, Rastvorsprünge oder dergleichen befinden.

14. Verwendung einer Vorrichtung nach einem der Ansprüche 1-13 zum wiederlösbaren, selbstklebenden Befestigen und wieder Lösen durch Ziehen an dem Anfasser des Streifens in Richtung der Verklebungsebene.

## Claims

1. Redetachable self-adhesive device
a) whose reverse face is bonded with a strip of a doubie-sidedly adhering adhesive sheet in such a way that one end of the adhesive sheet projects beyond the device as a grip tab,
b) the adhesive sheet is such that the bond made with it is redetachable by stretching pulling on the grip tab of the strip in the direction of the bond plane,
**characterized in that**
c) on its reverse face (2) the device (1), in the region (3A, 3B) situated against the grip tab (6) of the adhesive sheet strip (5) or against the grip tab (6) and also partly against the free adhesive composition, has an average roughness Rₐ of 0.4-25 µm.

2. Device according to Claim 1, **characterized in that** the region (3A, 3B) exhibiting the average roughness Rₐ has this average roughness Rₐ only in subregions, but especially in the entire region (3A, 3B).

3. Device according to Claim 1, **characterized in that** the average roughness Rₐ is 2-20 µm.

4. Device according to Claim 1, **characterized in that** the region (3A, 3B) exhibiting the average roughness Rₐ has an average depth of roughness R_{z} of 1-150 µm, in particular 2-100 µm.

5. Device according to Claim 1, **characterized in that** the region (3A, 3B) exhibiting the average roughness Rₐ is reduced together with the device (1) by injection moulding, or is produced in a subsequent workstep, in particular by etching, grinding, embossing or spark erosion.

6. Device according to Claim 1, **characterized in that** the region (3A, 3B) exhibiting the average roughness Rₐ adjoins the edge (4, 4') beyond which the grip tab (6) protrudes, at least corresponds or exceeds in its width the width of the strip (5), and in its depth measures 0.5-20 mm, especially 0.5-15 mm.

7. Device according to Claim 1, **characterized in that** the reverse face (2) of the device (1) has alternative edges (4, 4') by way of which the adhesive sheet strip (5) may be stuck on with its grip tab (6) projecting beyond said edges, there being provided corresponding regions (3A, 3B) exhibiting the average roughness Rₐ.

8. Device according to Claim 1, **characterized in that** besides the adhesive sheet strip (5) there are spacers (8A, 8B, 8C) whose height is less than the thickness of the adhesive sheet strip (5).

9. Device according to Claims 6 and 7, **characterized in that** the edge (4, 4') beyond which the grip tab (6) projects has a low static friction and sliding friction, in particular a low-energy polymer surface.

10. Device according to Claim 1, **characterized in that** the adhesive sheet strip (5) is elastically or plastically extensible with or without a carrier in between.

11. Device according to Claim 1, **characterized in that** the adhesion of the adhesive sheet strip (5) is less than the cohesion, the adhesion largely disappears when the sheet is extended, and the ratio of peel force to tear load is at least 1:2.0, the adhesive sheet being based on thermoplastic rubber and tackifying resins, with high elasticity and low plasticity.

12. Device according to Claim 1, **characterized in that** the reverse face of the adhesive sheet strip (5) is lined with a release laminate, such as a siliconized release paper or a release film.

13. Device according to Claim 1, **characterized in that** fixing means, such as hooks, latching projections or the like, are located on its front face and/or laterally.

14. Use of a device according to any of Claims 1-13 for redetachable self-adhesive fastening and redetachment by pulling on the grip tab of the strip in the direction of the bond plane.

## Revendications

1. Dispositif auto-adhésif, amovible,
a) sur la face arrière duquel est collée une bande de feuille adhésive qui colle des deux côtés de telle manière qu'une extrémité de la feuille adhésive dépasse du dispositif en tant que prise,
b) la feuille adhésive étant telle que le collage qu'elle réalise peut être défait par une traction avec étirement sur la prise de la bande dans le sens du plan de collage,
**caractérisé en ce que**
c) le dispositif (1) étant réalisé au niveau de sa face arrière (2), dans la zone (3A, 3B), adjacente à la prise (6) de la bande (5) de feuille adhésive ou adjacente à la prise (6) et aussi en partie à la masse adhésive présente une rugosité moyenne Rₐ de 0,4 à 25 µm.

2. Dispositif selon la revendication 1, **caractérisé en ce que** la zone (3A, 3B) présentant la rugosité moyenne Rₐ présente cette rugosité moyenne Rₐ seulement dans des zones partielles, mais en particulier dans la zone (3A, 3B) entière.

3. Dispositif selon la revendication 1, **caractérisé en ce que** la rugosité moyenne Rₐ est de 2 à 20 µm.

4. Dispositif selon la revendication 1, **caractérisé en ce que** la zone (3A, 3B) présentant la rugosité moyenne Rₐ présente une profondeur de rugosité moyenne R_{z} de 1 à 150 µm, en particulier de 2 à 100 µm.

5. Dispositif selon là revendication 1, **caractérisé en ce que** la zone (3A, 3B) présentant la rugosité moyenne Rₐ est réalisée lors du moulage par injection avec le dispositif (1) ou est réalisée lors d'une étape de procédé ultérieure, en particulier par décapage, ponçage, estampillage ou érosion par des étincelles.

6. Dispositif selon la revendication 1, **caractérisé en ce que** la zone (3A, 3B) présentant la rugosité moyenne Rₐ se raccorde au bord (4, 4') duquel la prise (6) fait saillie, correspond au moins en largeur à la largeur de la bande (5) ou la dépasse, et mesure 0,5 à 20 mm, notamment 0,5 à 15 mm de profondeur.

7. Dispositif selon la revendication 1, **caractérisé en ce que** la face arrière (2) du dispositif (1) présente des bords alternatifs (4, 4') sur lesquels la bande de feuille adhésive (5) peut être collée avec la prise (6) qui les dépasse, en prévoyant des zones (3A, 3B) correspondantes qui présentent la rugosité moyenne Rₐ.

8. Dispositif selon la revendication 1, **caractérisé en ce qu'**on a prévu, en plus de la bande de feuille adhésive (5), des écarteurs (8A, 8B, 8C), dont la hauteur est inférieure à l'épaisseur de la bande de feuille adhésive (5).

9. Dispositif selon la revendication 6 ou 7, **caractérisé en ce que** le bord (4, 4') dont dépasse la prise (6) présente un faible frottement par adhérence et glissement, en particulier une surface de matériau synthétique de faible énergie.

10. Dispositif selon la revendication 1, **caractérisé en ce que** la bande de feuille adhésive (5) peut être élastiquement ou plastiquement allongée, avec sans support intermédiaire.

11. Dispositif selon la revendication 1, **caractérisé en ce que** l'adhérence de la bande de feuille adhésive (5) est inférieure à la cohésion, l'adhésivité disparaît dans une large mesure lors de l'allongement de la feuille et le rapport de la force de décollage à la charge de rupture est d'au moins 1:2,0, la feuille adhésive étant une feuille à base de caoutchouc thermoplastique et de résines poisseuses, avec une élasticité élevée et une faible plasticité.

12. Dispositif selon la revendication 1, **caractérisé en ce que** la face arrière de la bande de feuille adhésive (5) est recouverte d'un laminat de séparation, tel qu'un papier de séparation siliconé ou une feuille de séparation.

13. Dispositif selon la revendication 1, **caractérisé en ce qu'**il présente sur sa face avant et/ou latéralement des dispositifs de fixation, tels que des crochets, des pièces d'encliquetage en saillie ou analogues.

14. Utilisation d'un dispositif selon l'une quelconque des revendications 1 à 13 pour la fixation auto-adhésive, amovible et le détachement par traction à la prise de la bande dans le sens du plan de collage.
